(19) Europäisches Patentamt

European Patent Office

Office européen des brevets

(11) EP 0 806 655 A2

## (12) EUROPÄISCHE PATENTANMELDUNG

(43) Veröffentlichungstag:
12.11.1997 Patentblatt 1997/46

(51) Int. Cl.$^6$: G01N 27/12, G01N 33/00

(21) Anmeldenummer: 97106157.7

(22) Anmeldetag: 14.04.1997

(84) Benannte Vertragsstaaten:
AT CH DE FR GB LI NL

(30) Priorität: 09.05.1996 DE 19618705

(71) Anmelder:
SIEMENS AKTIENGESELLSCHAFT
80333 München (DE)

(72) Erfinder:
• Reitmeier, Norbert
81543 München (DE)
• Fleischer, Maximilian
85635 Höhenkirchen (DE)
• Meixner, Hans
85540 Haar (DE)

(54) Verfahren zur Detektion von CH4 mit einem Ga2O3-Sensor und Verfahren zur Messung der CH4-Konzentration mit einem Ga2O3-Sensor

(57) $CH_4$ ist bei gleichzeitiger Präsenz von Alkohol mit einem $Ga_2O_3$-Sensor kaum detektierbar. Um dieses Problem zu lösen, wird der Sensorleitwert $((G(t_1))$ bei einer ersten Sensortemperatur erfaßt und mit einem ersten Schwellwert verglichen. Falls der Leitwert $((G(t_1))$ diesen Schwellwert überschreitet, steht fest, daß Alkohol im zu untersuchenden Gasgemisch vorhanden ist. Nun wird der Sensor aufgeheizt und ein zweiter Leitwert $(G(t_2))$ erfaßt. Falls das Verhältnis von zweiten zum ersten Leitwert einen zweiten Schwellwert überschreitet, ist $CH_4$ ebenfalls im Gasgemisch vorhanden.

Die Messung der $CH_4$-Konzentration erfolgt durch eine Erfassung von zwei Leitwerten $(G(t_1), G(t_2))$ bei verschiedenen Temperaturen. Aus einer Look-up-Tabelle ist der entsprechende $CH_4$-Wert entnehmbar.

FIG 2

EP 0 806 655 A2

## Beschreibung

Die Erfindung betrifft zum einen ein Verfahren zur Erkennung von Methan ($CH_4$) in einem Gasgemisch, das störende Gase, wie beispielsweise Lösungsmittel in Form von Alkohol enthält. Die Erfindung ist in einem Methanwarngerät einsetzbar. Weiterhin betrifft die Erfindung ein Verfahren zur Messung der $CH_4$-Konzentration in einem Gasgemisch, das störende Gase enthält. Gegenüber dem erstgenannten Verfahren zeichnet sich das zweite Verfahren durch eine exakte Angabe der Konzentration des Methans aus.

Ein gravierendes Problem beim Einsatz von Gassensoren auf der Basis von Galliumoxid-Filmen besteht darin, daß sich das Sensorsignal bei simultaner Präsenz mehrerer Gase aus der Überlagerung aller vorhandenen Gaskomponenten mit gleichen Eigenschaften, beispielsweise haben alle vorhandenen Gaskomponenten eine reduzierende Wirkung, zusammensetzt. Dieses allgemein als Querempfindlichkeit bezeichnete Verhalten stellt eine erhebliche Hürde bei der Realisierung von Methan-Warnern oder Methan-Meßgeräten auf der Basis gesputterter halbleitender $Ga_2O_3$-Schichten dar. Beispielsweise führt die mangelnde Selektivität der Sensorelemente bei gleichzeitiger Anwesenheit von Methan und Alkohol- bzw. Lösungsmitteldämpfen zu einer Mehrdeutigkeit des Sensorsignals und damit zu Fehlalarmen des Detektors, oder es wird eine Methan-Konzentration vorgetäuscht, die von der tatsächlichen Methan-Konzentration deutlich abweicht. Da die Sensitivität S der $Ga_2O_3$-Sensoren auf die reaktivere Komponente, d.h. die Alkohol- bzw. Lösungsmitteldämpfe, sehr hoch ist (typischerweise eine Größenordnung höher als auf die weniger reaktiven Gase) kann eine zusätzliche reduzierende Gaskomponente, beispielsweise Methan, nicht mit ausreichender Sensitivität detektiert werden.

Zur Verbesserung der Selektivität von Methan-Gassensoren auf der Basis von $Ga_2O_3$ wurden bisher mehrere Lösungen vorgeschlagen.

Aus dem Stand der Technik DE 41 39 721 ist eine Anordnung zum Nachweis von Gasen und ein Verfahren zum selektiven Nachweis mindestens eines in einem Gasgemisch enthaltenen Gases bekannt. Zum selektiven Nachweis mindestens eines in einem Gasgemisch enthaltenen Gases wird die Betriebstemperatur des Gassensors variiert. Es wird der Zeitverlauf eines von der elektrischen Leitfähigkeit der Sensorschicht abhängigen Signals ausgewertet. Hierzu wird die Betriebstemperatur des Gassensors sprunghaft erhöht und der Zeitverlauf des Sensorsignals registriert. Die Auswertung erfolgt mittels einer Fourier-Transformation. Nachteilhaft an diesem Verfahren ist der relativ große Aufwand für die Auswertung mittels der Fourier-Transformation.

Die Firma SATE, Salerno, Italien, verwendet ein Verfahren, bei dem der $CH_4$-Sensor für eine gewisse Zeitdauer bei einer ersten Temperatur und für eine gewisse Zeitdauer bei einer zweiten Temperatur betrieben wird. Dieser Vorgang wird periodisch wiederholt. Mit dieser Methode lassen sich Fehlalarme des Methan-Warners vermeiden. Mit diesem Sensor ist jedoch die Präsenz von Methan in einem Gasgemisch, das Alkohol- oder Lösungsmitteldämpfe enthält, nicht nachweisbar.

Aus dem Stand der Technik Sears et al, Selective Thermally Cycled Gas Sensing Using Fast Fourier-transform Techniques, Sensors and Actuators B, 2 (1990), S. 283-289 ist ein Verfahren zur selektiven Gasdetektion bekannt. Zur Analyse der Daten wird eine schnelle Fourier-Transformation (FFT) benutzt. Dieses Verfahren hat den Nachteil, daß zur Auswertung ein hoher Rechenaufwand notwendig ist.

Aus dem Stand der Technik Wlodek, S. et al, Signal-shape analysis of a thermally cycled tin-oxide gas sensor, Sensors and Actuators B, 1991, S. 63-68 ist ein Verfahren zur Analyse von Gasgemischen bekannt. Die Funktion Leitwertänderung über der Zeit wird durch mehrere aufsummierte Gauß-Funktionen nachgebildet. Die Indizes der Gauß-Funktionen stellen charakteristische Merkmale für die jeweils im Gasgemisch vorhandenen Gase dar. Auch hier ist zur Auswertung ein erheblicher Rechenaufwand notwendig.

Aus dem Stand der Technik Sears, W., et al, Algorithms to improve the selectivity of thermally-cycled tin oxide gas sensors, Sensors and Actuators, 1989, S. 333-349, ist ein Verfahren zur Bestimmung der Konzentration eines einzigen Gases mittels eines $SnO_2$-Gassensors bekannt. Dazu wird die Leitfähigkeit in Abhängigkeit von der Sensortemperatur und der Zeit gemessen. Für verschiedene Gase ergeben sich verschiedene Sensorsignalverläufe in Abhängigkeit von der Konzentration des Gases. Nachteilhaft an diesem Verfahren ist jedoch, daß es nur für Einzelgase verwendbar ist, d.h. für ein Gasgemisch beispielsweise aus Luft, Methan und Alkoholdämpfen ist dieses Verfahren nicht anwendbar.

Die Aufgabe der Erfindung ist es, ein Verfahren anzugeben, das es ermöglicht, mit Sicherheit die Konzentration eines bestimmten Gases anzugeben, das sich in einem Gasgemisch befindet, welches Störgase enthält.

Die Aufgabe wird durch Verfahren gemäß den Patentansprüchen 1, 2 und 3 gelöst.

Die Erfindung hat den Vorteil, daß die $CH_4$-Detektion bzw. die $CH_4$-Konzentrationsmessung mit herkömmlichen Galliumoxid-Sensoren ohne Modifikation der Sensorelemente möglich ist. Der Schaltungsaufwand ist gering. Ein weiterer Vorteil besteht in der Elimination von Chargenstreuungen. Die Alterung des Sensors spielt bei der Identifikation von Gasen keine Rolle.

Die Erfindung wird anhand mehrerer Figuren weiter erläutert.

Figur 1a bis 1e zeigt Diagramme, in denen die Leitwerte zeitabhängig und für unterschiedliche Gasgemische dargestellt sind.

Figur 2    zeigt ein Diagramm, aus dem die in einem Gasgemisch vorliegende Methan-Konzentration innerhalb der Grenzen, die durch die Auflösung der Eichmessung gegeben sind, entnehmbar ist.

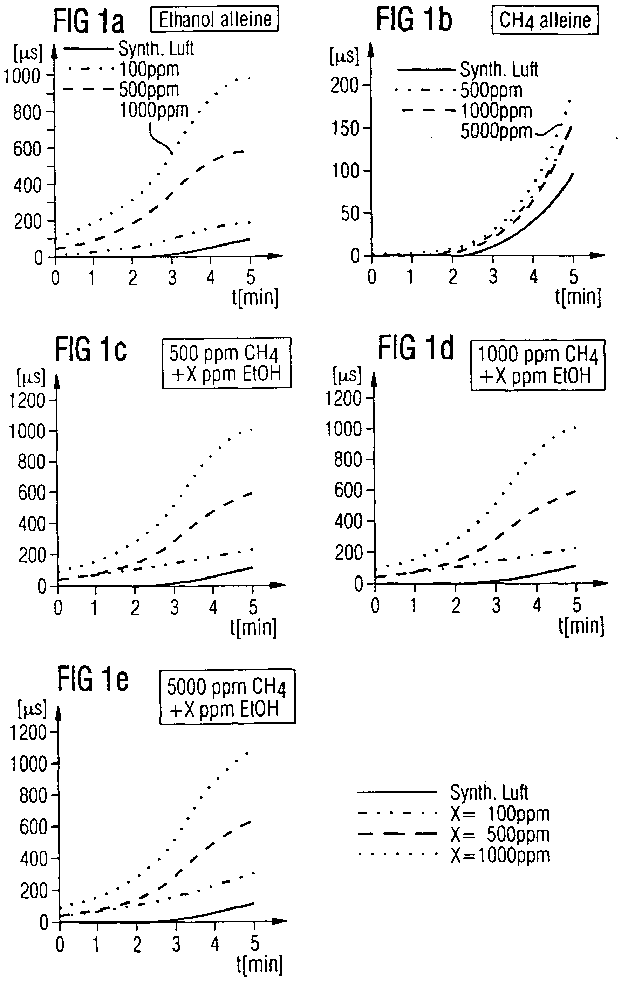

Ein für diese Erfindung verwendbarer Gassensor auf der Basis von $Ga_2O_3$ ist beispielsweise aus P 44 28 155.2 bekannt. In dieser Druckschrift ist der $Ga_2O_3$-Sensor beschrieben. Insbesondere wird auf die Beschreibungsseiten 3 bis 5 dieser Druckschrift verwiesen. Der Aufbau dieses Sensors ist in Figur 1a bis c gezeigt. Die angegebene Druckschrift ist Bestandteil der Beschreibung der Erfindung.

1. Ausführungsform (Methandetektor):

Die Erfindung beseitigt die Alkohol-Querempfindlichkeit der $Ga_2O_3$-Sensors durch den Einsatz eines speziellen Auswerteverfahrens: Der Sensor wird nicht, wie vom herkömmlichen Betriebsmodus resistiver Gassensoren bekannt, bei einer konstanten, für die zu detektierende Gaskomponente optimierten Einsatztemperatur (i.e. Heizspannung) betrieben, sondern transient zwischen zwei unterschiedlichen Temperaturen. Die auf diese Weise erhaltenen zeitabhängigen Leitfähigkeitsverläufe G(t) werden numerisch verarbeitet.

Der Methan-Sensor auf Galliumoxid-Basis wird für eine bestimmte Zeitdauer bei seiner Einsatztemperatur von typischerweise 850°C (=$\vartheta1$) betrieben. Falls der vom Sensor erhaltene Sensorleitwert $G_S$ einen Schwellwert $SW_{EtOH}$ überschreitet, was bedeutet, daß Alkohol- oder Lösungsmitteldämpfe detektiert worden sind, wird der Sensor in einem temperaturtransienten Zyklus von seiner Einsatztemperatur $\vartheta1$ auf eine Temperatur $\vartheta2 = 1050$ °C aufgeheizt. Für Versuchszwecke dauerte der Heizvorgang fünf Minuten. Die Zyklusdauer $t_{Zyklus}$ läßt sich in der Praxis jedoch auf ca. 30 Sekunden verringern.

In Figur 1 beträgt die auf der x-Achse angetragene Zyklendauer fünf Minuten. Die Detektion von Methan auf dem Hintergrund eines Alkohol- bzw. Lösungsmittel-Pegels wird in Figur 1 exemplarisch am Beispiel von Methan/Ethanol-Mischungen veranschaulicht.

Die Figur 1a bis e zeigt jeweils den transienten Leitwert G(t), auf der y-Achse in $\mu S$ angetragen, bezogen auf die Zeit t, auf der x-Achse in Minuten angetragen.

In Figur 1a sind die Verläufe der Sensorleitwerte G von unten nach oben für synthetische Luft, 100 ppm, 500 ppm und 1000 ppm Ethanol gezeigt. Am Ende des fünfminütigen Heizvorgangs stellt sich beispielsweise für eine Konzentration von 1000 ppm Ethanol ein Leitwert G(t = 5 min) von 972,8 $\mu S$ ein. Hingegen lag zu Beginn der Messung bei derselben Ethanolkonzentration ein Leitwert G(t = 0 min) von 100 $\mu S$ vor.

In Figur 1b sind die Verläufe der Sensorleitwerte G für synthetische Luft (entspricht dem Sensorsignalverlauf in Figur 1a), für 500 ppm, 1000 ppm und 5000 ppm $CH_4$ dargestellt. Ethanol ist in diesem Gasgemisch nicht vorhanden. Es ist zu erkennen, daß nach fünf Minuten sich eine Sensorleitfähigkeit G(t = 5 min) von 200 $\mu S$ bei 5000 ppm $CH_4$ einstellt. Es ist deutlich zu erkennen, daß der Sensor auf $CH_4$ erheblich schwächer reagiert, als auf Ethanol.

In Figur 1c sind Sensorleitwerte G für Gasgemische, die 500 ppm $CH_4$ und 100 ppm, 500 ppm bzw. 1000 ppm EtOH enthalten dargestellt. Zum Zeitpunkt t = 5 min ergibt sich bei einer Mischung von 500 ppm $CH_4$ und 500 ppm EtOH ein Leitwert G(t = 5 min) von 587,9 $\mu S$. Zum Zeitpunkt t = 4,5 min stellt sich ein Leitwert G(t = 4,5 min) von 544,35 $\mu S$ ein.

In Figur 1d sind die Verläufe der Sensorleiwerte G für 1000 ppm $CH_4$ in Verbindung mit 100 ppm, 500 ppm bzw. 1000 ppm EtOH dargestellt.

In Figur 1e sind die Verläufe der Sensorleitwerte G für 5000 ppm $CH_4$ in Verbindung mit 100 ppm, 500 ppm bzw. 1000 ppm EtOH darstellt.

Wie den Diagrammen zu entnehmen ist, sind die Steigungen der Leitfähigkeitsverläufe G(t) der EtOH/$CH_4$-Mischungen gegen Ende des Zyklusses größer als die allein von EtOH. Dieses Verhalten wird ausgenutzt, um $CH_4$ eindeutig bei gleichzeitiger Präsenz von Alkohol- und Lösungsmitteldämpfen zu identifizieren. Für den Fall des in Figur 1 gezeigten Zyklusses mit $t_{zyklus} = 5$ min wird als charakteristische Größe der Quotient von G(t = 5 min)/G(t = 4,5 min) herangezogen. Es ergeben sich die in der nachfolgenden Tabelle aufgelisteten Werte:

| [c] EtOH in ppm | G(t=5min)/G(t=4,5min) bei EtOH pur | G(t=5min)/G(t=4,min) bei 500 ppm $CH_4$ + EtOH | G(t=5min)/G(t=4,5min) bei 1000 ppm $CH_4$ + EtOH | G(t=5min)/G(t=4,5min) bei 5000 ppm $CH_4$ + EtOH |
|---|---|---|---|---|
| 100 | 1.04 | 1.13 | 1.14 | 1.20 |
| 500 | 1.03 | 1.08 | 1.09 | 1.12 |
| 1000 | 1.01 | 1.06 | 1.07 | 1.10 |

Wie aus dieser Tabelle zu entnehmen ist, liegen die Quotienten von $G(t = 5 \text{ min})/G(t = 4,5 \text{ min})$ für Mischungen von EtOH mit $CH_4$ durchweg über denen von EtOH ohne $CH_4$. Auf diese Weise kann die Präsenz von $CH_4$ bei gleichzeitiger Anwesenheit von Alkoholdämpfen eindeutig nachgewiesen werden, da ein Verhältnis zweier Leitwerte betrachtet wird, und zwar unabhängig von Chargenstreuungen (i.e. Absolutwerten von Leitwerten). Der numerische Aufwand zur Auswertung ist gering und kann mit handelsüblichen, kostengünstigen Microcontrollern (z.B. SAB 80C537) realisiert werden.

Bei dem Verfahren zur Detektion von $CH_4$ mittels einem Galliumoxid-Sensor wird der Sensor für eine definierte Zeitdauer bei einer ersten Temperatur $\vartheta1$ betrieben und dessen Sensorleitwert $G_S$ mit einem Schwellwert $SW_{EtOH}$ verglichen. Falls das Sensorsignal diesen Schwellwert $SW_{EtOH}$ unterschreitet, wird der Sensor weiterhin bei der ersten Temperatur $\vartheta1$ betrieben. Falls das Sensorsignal jedoch den ersten Schwellwert $SW_{EtOH}$ überschreitet, wird die Sensortemperatur erhöht und dabei werden zu zwei verschiedenen Zeitpunkten $t_1$ und $t_2$ die entsprechenden Sensorleitwerte $G(t_1)$ bzw. $G(t_2)$ erfaßt. Das Verhältnis aus dem Sensorleitwert $G(t_2)$ und dem Sensorleitwert $G(t_1)$ wird mit einem zweiten Schwellwert $SW_{CH4}$ verglichen. Falls das Verhältnis den Schwellwert $SW_{CH4}$ unterschreitet, wird der Sensor wieder auf Betriebstemperatur $\vartheta1$ zurückgefahren und der Sensorleitwert $G_S$ bei der Betriebstemperatur $\vartheta1$ wie oben beschrieben erfaßt. Falls jedoch der Schwellwert $SW_{CH4}$ überschritten wird, wird dies als ein Vorhandensein von Methan gewertet. Es kann im Bedarfsfall Alarm ausgelöst werden. Die obengenannten Schritte werden periodisch wiederholt. Je nach Anwendung kann der Alarm auch im Fall des anschließenden Rückgangs der $CH_4$-Konzentration, wobei der Schwellwert $SW_{CH4}$ unterschritten wird, aufrechterhalten werden. Erst die manuelle Bestätigung setzt den Alarm zurück. Es ist auch möglich, den ausgelösten Alarm in diesem Fall automatisch zurückzusetzen. Welche der beiden Varianten in Frage kommt, hängt vom Anwendungsfall ab.

Eine Alternative zur Bildung des Quotienten $G(t_2)/G(t_1)$ besteht in der Differenzierung des Sensorsignals mittels eines Operationsverstärkers. Im Gegensatz zu der Verhältnisbildung $G(t_2)/G(t_1)$, die diskret durchgeführt wird, hat die Differenzierung mittels eines Operationsverstärkers den Vorteil einer kontinuierlichen Überwachung.

2. Ausführungsform: (Methan-Konzentrationsmessung)

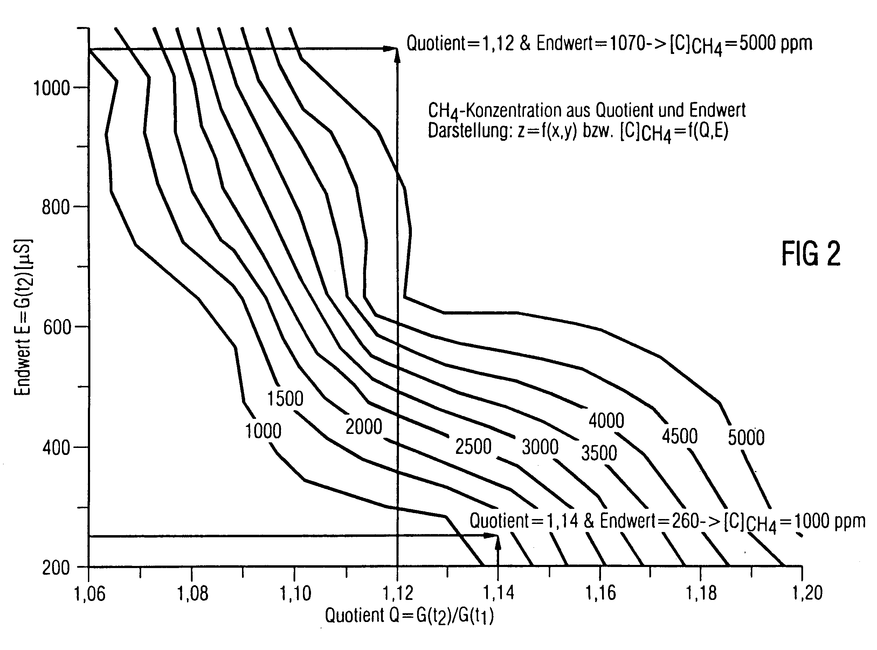

Es ist auch möglich, die $CH_4$-Konzentration trotz Anwesenheit von Störgasen exakt zu bestimmen. Der $Ga_2O_3$-Sensor wird bei einer ersten Temperatur $\vartheta1$ betrieben, und dessen Sensorleitwert $G_S$ aufgenommen. Anschließend wird die Temperatur des Sensors erhöht und dabei ein zweites Sensorsignal $G(t_2)$ erfaßt. Aus den beiden Sensorleitwert $G(t_2)$ und $G_S$ wird rechnerisch das Verhältnis gebildet. Aus einer zweidimensionalen Look-up-Tabelle, in welcher zu dem Sensorleitwert $G(t_2)$ und dem Verhältnis von $G(t_2)$ zu $G_S$ der jeweilige $CH_4$-Konzentrationswert gespeichert ist, kann der entsprechende $CH_4$-Wert sofort entnommen werden. Die Tabelle ist einmal zu erstellen und kann in einem EEPROM abgespeichert sein. Die Tabelle kann beispielsweise aus einem Diagramm, wie es in Figur 2 gezeigt ist, gewonnen werden. In Figur 2 ist auf der y-Achse der zum Zeitpunkt $t_2$ auftretende Sensorleitwert $G(t_2)$ in $\mu S$ angetragen. Auf der x-Achse ist der Quotient aus $G(t_2)/G(t_S)$ angetragen.

Abhängig von der EtOH- und $CH_4$-Konzentration ergeben sich die verschiedenen im Diagramm gezeigten Linien. Aus Figur 2 ist beispielsweise entnehmbar, daß bei einem Quotienten von $G(t_2)/G(t_1)$ von 1,14 und einem Leitwert $G(t_2)$ von 260 $\mu S$ eine $CH_4$-Konzentration von 1000 ppm vorherrscht. Die in Figur 2 dargestellte Graphik ist ein Konturplott $z = f(x,y)$ bzw. $[c]_{CH4} = f(Q,E)$, d.h. die Linien sind Linien gleicher $CH_4$-Konzentrationen. Wie der Graphik zu entnehmen ist, kann in Kenntnis des Quotienten $G(t_2)/G(t_1)$ und des Leitwerts $G(t_2)$ innerhalb der Genauigkeit, mit der geeicht wird, jedem Wertepaar $[G(t_2)/G(t_1); G(t_2)]$ eine $CH_4$-Konzentration zugeordnet werden. Aus der folgenden Tabelle sind einige Absolutwerte für Leitwerte bei unterschiedlichen Gasmischungen entnehmbar.

| [c]EtOH in ppm | G(t2) in $\mu S$ bei EtOH pur | G(t2) in $\mu S$ bei 500 ppm $CH_4$ | G(t2) in $\mu S$ bei 1000 ppm $CH_4$ | G(t2) in $\mu S$ bei 5000 ppm $CH_4$ |
|---|---|---|---|---|
| 100 | 182.0 | 241.6 | 260.1 | 303.5 |
| 500 | 569.5 | 587.9 | 618.4 | 637.3 |
| 1000 | 972.8 | 1005.0 | 1047.1 | 1070.0 |

Grundsätzlich ist an Stelle des Leitwerts G auch jede andere Meßgröße wie Sensorwiderstand oder Sensorsignal zur Auswertung verwendbar.

Eine lineare Erhöhung der Temperatur von $\vartheta1$ auf $\vartheta2$ erfolgt vorteilhafterweise durch eine lineare Erhöhung der Heizspannung (typisch 7 - 11 V).

**Patentansprüche**

1. Verfahren zur Detektion von $CH_4$ mit einem $Ga_2O_3$-Sensor,

    1.1 bei dem der Sensor bei einer ersten Temperatur ($\vartheta 1$) betrieben wird, und dessen Sensorsignal ($G_S$) mit einem ersten Schwellwert ($SW_{EtOH}$) verglichen wird,
    1.2 bei dem, falls das Sensorsignal ($G_S$) den ersten Schwellwert ($SW_{EtOH}$) unterschreitet, der Schritt 1.1 wiederholt wird, und falls das Sensorsignal ($G_S$) den ersten Schwellwert ($SW_{EtOH}$) überschreitet, der Schritt 1.3 ausgeführt wird,
    1.3 bei dem die Sensortemperatur erhöht wird und dabei zu zwei verschiedenen Zeitpunkten (t1, t2) die entsprechenden Sensorsignale ($G(t_1)$, $G(t_2)$) erfaßt werden,
    1.4 bei dem das Verhältnis aus dem Sensorsignal ($G(t_2)$) und dem Sensorsignal (G1) gebildet wird und dieses Verhältnis mit einem zweiten Schwellwert ($SW_{CH4}$) verglichen wird,
    1.5 bei dem, falls das Verhältnis den Schwellwert ($SW_{CH4}$) unterschreitet, wieder beim Schritt 1.1 begonnen wird, und falls der Schwellwert ($SW_{CH4}$) überschritten wird, $CH_4$ als vorhanden gilt.

2. Verfahren zur Detektion von $CH_4$ mit einem $Ga_2O_3$-Sensor,

    2.1 bei dem der Sensor bei einer ersten Temperatur ($\vartheta 1$) betrieben wird, und dessen Sensorsignal ($G_S$) mit einem ersten Schwellwert ($SW_{EtOH}$) verglichen wird,
    2.2 bei dem, falls das Sensorsignal ($G_S$) den ersten Schwellwert ($SW_{EtOH}$) unterschreitet, der Schritt 2.1 wiederholt wird, und, falls das Sensorsignal ($G_S$) den ersten Schwellwert ($SW_{EtOH}$) überschreitet, der Schritt 2.3 ausgeführt wird,
    2.3 bei dem die Sensortemperatur erhöht wird und dabei mittels eines Operationsverstärkers das Sensorsignal differenziert wird,
    2.4 bei dem das differenzierte Sensorsignal mit einem zweiten Schwellwert ($SW_{CH4}$) verglichen wird,
    2.5 bei dem, falls das differenzierte Sensorsignal den zweiten Schwellwert ($SW_{CH4}$) unterschreitet, wieder beim Schritt 2.1 begonnen wird, und falls der zweite Schwellwert ($SW_{CH4}$) überschritten wird, $CH_4$ als vorhanden gilt.

3. Verfahren zur Messung der $CH_4$-Konzentration mit einem $Ga_2O_3$-Sensor,

    3.1 bei dem der Sensor bei einer ersten Temperatur ($\vartheta 1$) betrieben wird, und dessen Sensorsignal ($G_S$) aufgenommen wird,
    3.2 bei dem die Temperatur des Sensors erhöht wird und dabei ein zweites Sensorsignal ($G(t_2)$) erfaßt wird,
    3.3 bei dem das Verhältnis aus den beiden Sensorsignalen ($G(t_2)$ und $G_S$) gebildet wird,
    3.4 bei dem aus einer gespeicherten Tabelle die zu dem Verhältnis und dem Sensorsignal ($G(t_2)$) gehörige $CH_4$-Konzentration entnommen wird.

FIG 1a — Ethanol alleine

FIG 1b — CH₄ alleine

FIG 1c — 500 ppm CH₄ +X ppm EtOH

FIG 1d — 1000 ppm CH₄ +X ppm EtOH

FIG 1e — 5000 ppm CH₄ +X ppm EtOH

FIG 2

Quotient=1,12 & Endwert=1070->[C]$_{CH_4}$=5000 ppm

CH$_4$-Konzentration aus Quotient und Endwert
Darstellung: z=f(x,y) bzw. [C]$_{CH_4}$=f(Q,E)

Quotient=1,14 & Endwert=260->[C]$_{CH_4}$=1000 ppm

5000
4500
4000
3500
3000
2500
2000
1500
1000

Quotient Q = G(t$_2$)/G(t$_1$)

Endwert E = G(t$_2$)[µS]